# EUROPÄISCHE PATENTANMELDUNG

(11) **EP 1 072 820 A2**
(43) Veröffentlichungstag der Anmeldung: **31.01.2001**
(21) Anmeldenummer: 00113109.3
(22) Anmeldetag: 28.06.2000
(51) Int. Cl.: F16H 61/04, F16H 59/18

(54) **Verfahren zur Steuerung eines Schaltvorgangs eines automatisierten Doppelkupplungsgetriebes**

(30) Priorität: 26.07.1999 DE 19934997
(71) Anmelder: Volkswagen Aktiengesellschaft, 38436 Wolfsburg (DE)
(72) Erfinder: Hinrichsen, Uwe, Dr., 38124 Braunschweig (DE); Bothe, Edgar, Dipl.-Ing., 31224 Peine (DE); Becker, Volker, Dipl.-Ing., 38518 Gifhorn (DE)

(57) **Zusammenfassung**

Ein Verfahren zur Steuerung eines Schaltvorganges eines automatisierten Doppelkupplungsgetriebes, insbesondere eines Kraftfahrzeuges, bei dem von einem wirksamen Lastgang (G1) in einen Zielgang (G2) gewechselt wird, sieht ein Einstellen einer Übergangsdrehzahl (n_{Üg}) und nachfolgend ein Schalten des Zielganges (G2) vor, bevor unter Konstanthaltung der Übergangsdrehzahl (n_{Üg}) ein überschnittenes Schließen einer dem Zielgang (G2) zugeordneten Kupplung (K2) und ein Öffnen einer dem Lastgang (G1) zugeordneten Kupplung (K1) erfolgt.

## Beschreibung

Die Erfindung beschäftigt sich mit einem Verfahren zur Steuerung eines Schaltvorganges eines automatisierten Doppelkupplungsgetriebes, insbesondere eines Kraftfahrzeuges, wobei von einem wirksamen Lastgang in einen Zielgang gewechselt wird.

Doppelkupplungsgetriebe sind seit längerem bekannt, so z. B. aus der DE 35 46 454 A1, in der ein Gangschaltgetriebe für ein Kraftfahrzeug mit Doppelkupplung vorgeschlagen wird. Ein Doppelkupplungsgetriebe weist gewöhnlich eine erste Getriebeeingangswelle, der eine erste Kupplung und Gangräder eines oder mehrerer ungeradzahliger Gänge zugeordnet sind, und eine zweite Getriebeeingangswelle auf, der eine zweite Kupplung und Gangräder eines oder mehrerer geradzahliger Gänge zugeordnet sind, In einem derart ausgebildeten Doppelkupplungsgetriebe besteht ein Schaltvorgang, d.h. ein Wechsel von dem wirksamen Lastgang in den nächsthöheren oder nächstniedrigeren Zielgang zunächst in einem Einlegen des Zielganges, was z.B. über eine zugeordnete Schaltmuffe und eine mit dieser in Verbindung stehende Synchronisiervorrichtung erfolgen kann, und in einem anschließenden gleichzeitigen Trennen der der Getriebeeingangswelle des Lastganges zugeordneten Kupplung und Schließen der der Getriebeeingangswelle des Zielganges zugeordneten Kupplung. Die Kraftübertragung erfolgt also jeweils abwechselnd über die erste oder die zweite Getriebeeingangswelle.

Eine aus einem derartigen Schaltvorgang resultierende Änderung der Motordrehzahl kann, insbesondere bei einem großen Gangsprung, der beispielsweise häufig bei einem Hochschalten aus einem Anfahrgang heraus vorkommt, von einem Fahrer als unangenehm empfunden werden. Des weiteren können in den beteiligten Kupplungen aufgrund längerer Schlupfphasen thermische Probleme auftreten. Daher wird in der DE 196 00 739 A1 eine Getriebesteuerung zur Reduzierung der thermischen Belastung von Schaltelementen eines Getriebes während eines Anfahrens vorgeschlagen, bei der bei einem Anfahrvorgang wenigstens zwei Schaltelemente, die als Kupplung und / oder Bremse ausgebildet sein können, nutzbar und entsprechend ihrer thermischen Belastbarkeit regel- und steuerbar sind. Aus der DE 196 19 717 A1 ist dagegen eine Anfahrsteuervorrichtung für Kraftfahrzeug-Automatikgetriebe bekannt, die derart ausgebildet ist, daß ein Anfahrvorgang in Abhängigkeit einer Drosselklappenstellung und / oder einer Änderungsrate der Drosselklappenstellung eines zugeordneten Antriebsmotors steuerbar ist, wodurch einem Fahrerwunsch nach einer kleineren oder größeren Beschleunigung entsprochen werden kann. Eine unmittelbare Beeinflussung der Schaltvorgänge zur Verbesserung des Schaltkomforts und damit des allgemeinen Fahrkomforts ist jedoch in den zitierten Vorrichtungen nicht vorgesehen.

Es ergibt sich daher das Problem, ein Verfahren zur Steuerung eines Schaltvorganges eines automatisierten Doppelkupplungsgetriebes bereitzustellen, durch das der Schaltkomfort bei einem Wechsel von einem wirksamen Lastgang in einen Zielgang verbessert wird.

Das Problem wird durch ein Verfahren nach Anspruch 1 gelöst: Vorteilhafte Ausgestaltungen des Verfahrens werden in den Unteransprüchen 2 bis 11 beschrieben.

Das Verfahren zur Steuerung eines Schaltvorganges eines automatisierten Doppelkupplungsgetriebes, insbesondere eines Kraftfahrzeuges, bei dem von einem wirksamen Lastgang in einen Zielgang gewechselt wird, sieht vor, daß eine Übergangsdrehzahl eingestellt und der Zielgang geschaltet wird. Daraufhin erfolgt ein überschnittenes Schließen einer dem Zielgang zugeordneten Kupplung und Öffnen einer dem Lastgang zugeordneten Kupplung unter Konstanthaltung der Übergangsdrehzahl.

Als Zielgang wird zumeist ein Gang gewählt, der einem aktuellen Betriebszustand des Antriebsmotors, einem Fahrzustand des Kraftfahrzeuges und Kommandos eines Fahrers weitgehend entspricht. Unter anderem sind dadurch unzulässige Drehzahlen des Antriebsmotors vermeidbar, die neben einer mechanischen Überbeanspruchung beteiligter Bauteile auch Komforteinbußen mit sich bringen würden. Aufgrund der Bauweise des Doppelkupplungsgetriebes ist der Zielgang im allgemeinen in Bezug zu einem aktuell eingelegten Gang entweder der nächsthöhere oder der nächstniedrigere Gang. Durch die nachfolgende Bestimmung der für den eigentlichen Schaltvorgang vorgesehenen Übergangsdrehzahl ist ebenfalls eine optimale Anpassung an den aktuellen Betriebs- bzw. Fahrzustand des Kraftfahrzeuges und an Fahrerkommandos möglich, die z.B. über eine mehr oder weniger starke bzw. schnelle Betätigung eines Fahrpedals eingebbar sind. Nach dem Einstellen der Übergangsdrehzahl und dem Schalten des Zielganges erfolgt ein Übergang von dem Lastgang auf den Zielgang unter Konstanthaltung der Übergangsdrehzahl. Die bei herkömmlichen Schaltvorgängen üblichen Drehzahlschwankungen werden vermieden, so daß der Schaltkomfort und damit der gesamte Fahrkomfort wesentlich verbessert werden.

Unter Verwendung eines Anfahrganges als Lastgang und eines nächsthöheren Ganges als Zielgang kann das Verfahren zur Steuerung eines Anfahrvorganges genutzt werden. Unter Umständen dauert ein derartiger Anfahrvorgang länger als ein konventioneller Anfahrvorgang. Durch eine Vermeidung von Drehzahlschwankungen läuft ein Anfahrvorgang nach dem erfindungsgemäßen Verfahren jedoch wesentlich komfortabler ab. Während eines derartigen Anfahrvorganges ergeben sich stetigere und harmonischere Drehzahl- und Drehmomentübergänge als bei Anfahrvorgängen, die nach bekannten Verfahren gesteuert werden.

Der Zielgang kann in Abhängigkeit von der Drehzahl des Antriebsmotors bestimmt werden. Dabei kann unterhalb einer unteren Grenzdrehzahl ein nächstniedrigerer Gang und oberhalb einer oberen Grenzdrehzahl ein nächsthöherer Gang zum Zielgang bestimmt werden. Das erfindungsgemäße Verfahren ist also sowohl für Hochschalt- als auch für Zurückschaltvorgänge nutzbar. Eine Auswahl eines unzulässigen Zielganges, der z. B. ein Überdrehen oder Abwürgen des Antriebsmotors zur Folge hätte, wird durch eine drehzahlabhängige Bestimmung des Zielganges vermieden.

Alternativ oder zusätzlich zu einer Drehzahlabhängigkeit kann der Zielgang auch in Abhängigkeit von einer Fahrpedalstellung und / oder in Abhängigkeit von einer Änderungsrate der Fahrpedalstellung bestimmt werden. Die Fahrpedalstellung und die Änderungsrate der Fahrpedalstellung sind unmittelbar abhängig von einer Betätigung durch den Fahrer; sie geben also den Wunsch des Fahrers nach einer bestimmten Fahrgeschwindigkeit, einer Änderung der Fahrgeschwindigkeit, und einer entsprechenden Beschleunigung oder Verzögerung wieder.

Alternativ zu einer Fahrpedalabhängigkeit kann der Zielgang in Abhängigkeit von einer Drosselklappenstellung und / oder in Abhängigkeit von einer Änderungsrate der Drosselklappenstellung bestimmt werden. Da die jeweilige Drosselklappe und das betreffende Fahrpedal in der Regel mechanisch oder elektronisch miteinander in Verbindung stehen, sind die Abhängigkeiten sinngemäß identisch zu der zuvor beschriebenen fahrpedalabhängigen Bestimmung des Zielganges. Da es aber bei der Übertragung von Bewegungen des Fahrpedals zur Drosselklappe zu Übertragungsabweichungen und Verzögerungen kommen kann, berücksichtigt die drosselklappenabhängige Bestimmung des Zielganges eher den aktuellen Betriebszustand des Antriebsmotors, während die fahrpedalabhängige Bestimmung stärker auf Aktivitäten des Fahrers reagiert.

Die Übergangsdrehzahl kann in Abhängigkeit eines Drehmomentverlaufes eines zugeordneten Antriebsmotors bestimmt werden. Bei der drehmomentabhängigen Bestimmung der Übergangsdrehzahl werden die Eigenschaften des Anrtriebsmotors optimal genutzt.

Die Übergangsdrehzahl kann jedoch auch in Abhängigkeit von einem Fahrprogrammodus bestimmt werden, und zwar im Vergleich zu einem Normalmodus in einem Economy-Modus niedriger und in einem Sportmodus höher. Der jeweilige Schaltvorgang ist dadurch dem vom Fahrer gewählten Fahrprogrammodus anpaßbar und erfüllt damit Anforderungen des Fahrers an hohe Beschleunigung bzw. Verzögerung oder an hohen Komfort und niedrigen Benzinverbrauch.

Alternativ oder ergänzend zur drehmoment- und / oder fahrprogrammabhängigen Bestimmung kann die Übergangsdrehzahl in Abhängigkeit von einer mittleren Fahrpedalstellung und / oder in Abhängigkeit von einer Änderungsrate der Fahrpedalstellung bestimmt werden. Dabei kann die Übergangsdrehzahl mit kleinerer mittlerer Fahrpedalstellung und / oder mit kleinerer Änderungsrate der Fahrpedalstellung niedriger und mit größerer mittlerer Fahrpedalstellung und / oder mit größerer Änderungsrate der Fahrpedalstellung höher bestimmt wird. Eine Fahrweise mit durchschnittlich hoher Drehzahl, die durch eine größere mittlere Fahrpedalstellung erreichbar ist, und / oder starken Drehzahländerungen des Antriebsmotors bzw. Geschwindigkeitsänderungen des Kraftfahrzeuges, die einer hohen Änderungsrate der Fahrpedalstellung entsprechen, können als Wunsch des Fahrers nach hoher Fahrdynamik bzw. sportlicher Fahrweise interpretiert werden. Es ist daher vorteilhaft, in diesem Fall eine generell höhere Übergangsdrehzahl vorzusehen, um dem Wunsch des Fahrers zu entsprechen. Im Gegensatz dazu kann durch eine generelle Absenkung der Übergangsdrehzahl dem Wunsch des Fahrers nach besonders komfortabler Fahrweise entsprochen werden, wenn im Mittel eine kleinere Fahrpedalstellung vorliegt und / oder kleine Änderungsraten der Fahrpedalstellung erfolgen.

Alternativ zur fahrpedalabhängigen Bestimmung kann die Übergangsdrehzahl in Abhängigkeit von einer mittleren Drosselklappenstellung und / oder in Abhängigkeit von einer Änderungsrate der Drosselklappenstellung bestimmt werden. Dabei kann die Übergangsdrehzahl mit kleinerer mittlerer Drosselklappenstellung und / oder mit kleinerer Änderungsrate der Drosselklappenstellung niedriger und mit größerer mittlerer Drosselklappenstellung und / oder mit größerer Änderungsrate der Drosselklappenstellung höher bestimmt werden. Da das Fahrpedal und die Drosselklappe mechanisch oder elektronisch miteinander in Verbindung stehen, gilt sinngemäß das gleiche wie für die fahrpedalabhängige Bestimmung der Übergangsdrehzahl.

Die Übergangsdrehzahl kann mittels einer Motorsteuerung konstant gehalten werden, z. B. indem bei einer negativen Drehzahlabweichung, d.h. bei einem Absinken der Drehzahl des Antriebsmotors unter die Übergangsdrehzahl, ein Motordrehmoment erhöht wird, und daß bei einer positiven Drehzahlabweichung, d.h. bei einem Ansteigen der Drehzahl des Antriebsmotors über die Übergangsdrehzahl, das Motordrehmoment verringert wird.

Alternativ oder zusätzlich zur Nutzung der Motorsteuerung kann die Übergangsdrehzahl aber auch mittels einer Kupplungssteuerung konstant gehalten werden. z.B. kann bei einer negativen Drehzahlabweichung die dem Lastgang zugeordnete Kupplung schneller geöffnet und bei einer positiven Drehzahlabweichung die dem Zielgang zugeordnete Kupplung schneller geschlossen werden. Durch den unmittelbaren Eingriff in die Steuerung der Kupplungen wird der Schaltvorgang beschleunigt und die Motorsteuerung bleibt im wesentlichen ungestört.

Im folgenden wird das Verfahren zur Steuerung eines Schaltvorganges eines automatisierten Doppelkupplungsgetriebes anhand von zwei Figuren näher erläutert. Dazu zeigen
- Figur 1:: einen Drehzahlverlauf bei einem Schaltvorgang nach dem erfindungsgemäßen Verfahren, und
- Figur 2:: einen Drehzahlverlauf bei einem Schaltvorgang nach Stand der Technik.

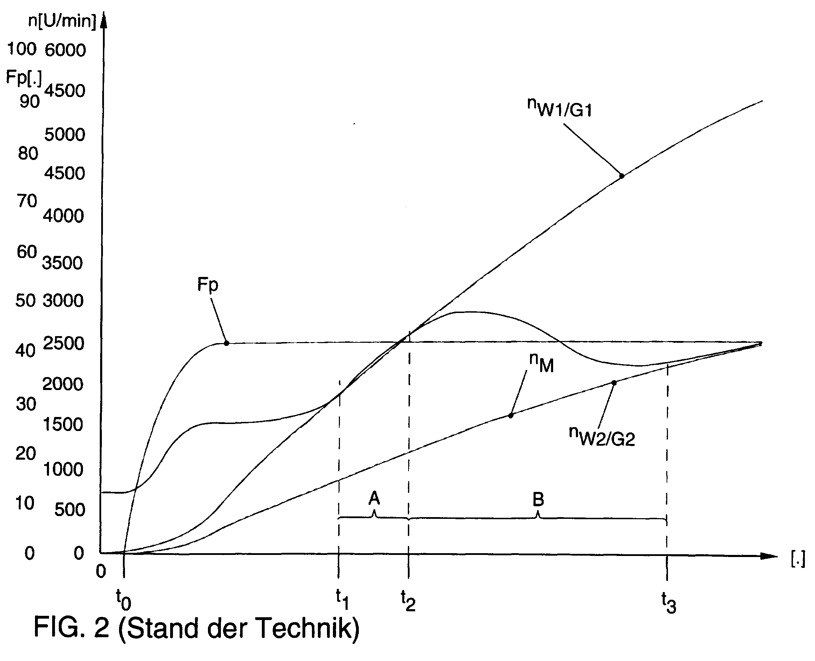

In der Figur 2 sind zeitliche Verläufe einer Fahrpedalstellung Fp und von Drehzahlverläufen eines Antriebsmotors M, n_{M}, einer ersten Getriebeeingangswelle W1, n_{W1/G1}, und einer zweiten Getriebeeingangswelle W2, n_{W2/G2}, während eines konventionellen Hochschaltvorganges nach dem Stand der Technik von einem ersten Gang G1 in einen zweiten Gang G2 dargestellt, der im Rahmen eines Anfahrvorganges durchgeführt wird. Die unterbrochene Kurve beschreibt den Verlauf der Fahrpedalstellung Fp über der Zeit t. Die durchgezogene Linie gibt den zeitlichen Verlauf der Motordrehzahl n_{M} wieder. Die Kurve mit der einfach strichpunktierten Linie stellt den zeitlichen Verlauf der Drehzahl n_{W1/G1} der ersten Getriebeeinganswelle W1 dar, wobei sich die Drehzahl n_{W1/G1} bei eingelegtem ersten Gang G1 aus der momentanen Geschwindigkeit des betreffenden Kraftfahrzeuges ergibt. Der entsprechende Verlauf der Drehzahl n_{W2/G2} der zweiten Getriebeeingangswelle W2 für den eingelegten zweiten Gang G2 ist als doppelt strichpunktierte Linie dargestellt.

Der unterbrochenen Kurve für den zeitlichen Verlauf der Fahrpedalstellung Fp nach wird das Fahrpedal zu einem Zeitpunkt t₀ betätigt und erreicht wenig später eine Position von rund 40% bezogen auf einen maximalen Fahrpedalweg von 100%. Im weiteren Verlauf wird diese Fahrpedalstellung weitgehend konstant beibehalten. Der durchgezogenen Kurve für den Verlauf der Motordrehzahl n_{M} ist zu entnehmen, daß der Antriebsmotor M mit kurzer zeitlicher Verzögerung von einer Leerlaufdrehzahl von rund 800 U/min zunächst auf eine Drehzahl von etwa 1500 U/min beschleunigt wird. Zu dem Zeitpunkt t₀ beginnt ebenfalls ein Schließen einer der ersten Getriebeeingangswelle W1 zugeordneten ersten Kupplung K1. Infolgedessen setzt sich das Kraftfahrzeug in Bewegung. Im weiteren Verlauf wird die Differenz zwischen der Motordrehzahl n_{M} und der Drehzahl n_{W1/G1} der ersten Getriebeeingangswelle W1 unter Erhöhung beider Drehzahlen reduziert, und zu einem Zeitpunkt t₁ wird schließlich Synchronlauf zwischen dem Antriebsmotor M und der ersten Getriebeeingangswellle W1 erreicht. Anschließend findet der Schaltvorgang zwischen dem ersten Gang G1 und dem zweiten Gang G2 statt. In einer zwischen dem Zeitpunkt t₁, und einem Zeitpunkt t₂ liegenden Überschneidungsphase A findet ein zeitlich überschnittenes Trennen der ersten Kupplung K1 und ein Schließen einer der zweiten Getriebeeingangswelle W2 zugeordneten zweiten Kupplung K2 statt. Ab dem Zeitpunkt t₂ wird das gesamte Drehmoment des Antriebsmotors M über die zweite Getriebeeingangswelle W2 übertragen. Zum Abbau des Schlupfes der zweiten Kupplung K2 schließt sich eine bis zu einem Zeitpunkt t₃ reichende Drehzahlanpassungsphase B an, in der unter Reduzierung der Motordrehzahl n_{M} schließlich Synchronlauf zwischen dem Antriebsmotor M und der zweiten Getriebeeingangswelle W2 erreicht wird, bevor unter Erhöhung der Motordrehzahl n_{M} weiter beschleunigt wird. Die mit einem derartigen Schaltvorgang verbundenen Drehzahlschwankungen werden von einem Fahrer als unangenehm empfunden und mindern den Fahrkomfort.

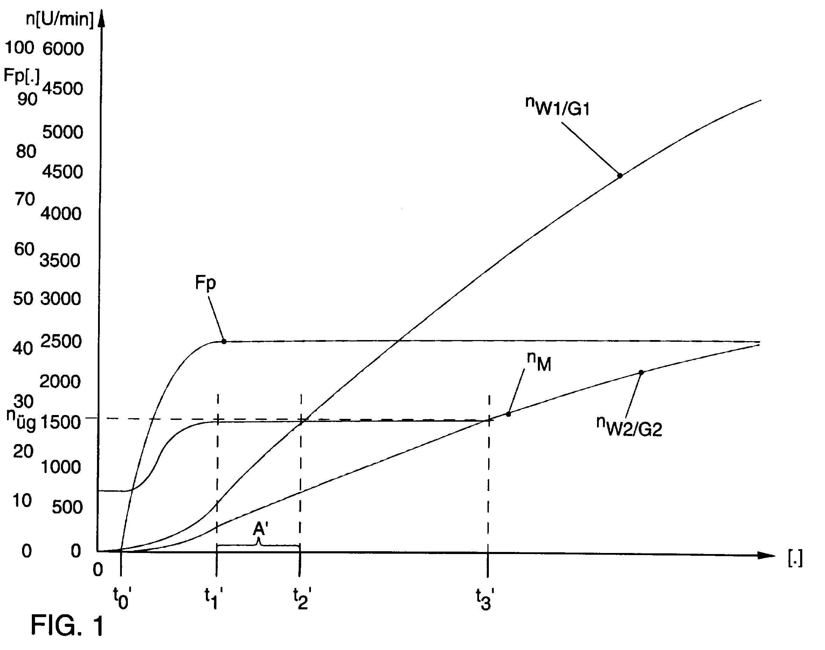

Dagegen sind in der Figur 1 zum Vergleich die zeitlichen Verläufe der Fahrpedalstellung Fp und der Drehzahlen des Antriebsmotors M, n_{M}, der ersten Getriebeeingangswelle W1, n_{W1/G1}, und der zweiten Getriebeeingangswelle W2, n_{W2/G2}, entsprechend einem Hochschaltvorgang nach dem erfindungsgemäßen Verfahren von dem ersten Gang G1 in den zweiten Gang G2 dargestellt. Die Kennzeichnung der Kurvenverläufe entspricht derjenigen in Fig. 2.

Hier beginnt das Schließen der der ersten Getriebeeingangswelle W1 zugeordneten Kupplung zu einem Zeitpunkt t₀'. Der anschließende Schaltvorgang zwischen dem ersten Gang G1 und dem zweiten Gang G2 erfolgt zwischen einem Zeitpunkt t₁' und einem Zeitpunkt t₂'. In einer zwischen dem Zeitpunkt t₁' und einem Zeitpunkt t₂' liegenden Überschneidungsphase A' findet ein zeitlich überschnittenes Trennen der ersten Kupplung K1 und ein Schließen der zweiten Kupplung K2 unter weitgehender Konstanthaltung der Motordrehzahl n_{M} statt, die in diesem Fall als Übergangsdrehzahl n_{Üg} bezeichnet wird. Erst nach Ablauf einer Schlupfphase der zweiten Kupplung K2 zum Zeitpunkt t₃', d.h. nach Erreichen von Synchronlauf zwischen dem Antriebsmotor M und der zweiten Getriebeeingangswelle W2, wird unter Erhöhung der Motordrehzahl n_{M} weiter beschleunigt. Der in Fig. 1 beschriebene Schaltvorgang nach dem erfindungsgemäßen Verfahren dauert in etwa genauso lange wie der in Fig. 2 beschriebene Schaltvorgang nach dem Stand der Technik. Dagegen werden Drehzahlschwankungen vermieden und der Fahrkomfort wesentlich verbessert.

### BEZUGSZEICHENLISTE

- A: Überschneidungsphase
- A': Überschneidungsphase
- B: Drehzahlanpassungsphase
- Fp: Fahrpedalstellung
- G1: erster Gang
- G2: zweiter Gang
- K1: erste Kupplung
- K2: zweite Kupplung
- M: Antriebsmotor
- n: Drehzahl
- n_{M}: Motordrehzahl
- n_{Üg}: Übergangsdrehzahl
- n_{W1/G1}: Drehzahl der ersten Getriebeeingangswelle bei eingelegtem ersten Gang
- n_{W2/G2}: Drehzahl der zweiten Getriebeeingangswelle bei eingelegtem zweiten Gang
- t: Zeit, Zeitpunkt
- t₀: Beginn der Fahrpedalbetätigung, Beginn des Einkuppelns des ersten Ganges
- t₀': Beginn der Fahrpedalbetätigung, Beginn des Einkuppelns des ersten Ganges
- t₁: Beginn der Überschneidungsphase A
- t₁': Beginn der Überschneidungsphase A'
- t₂: Ende der Überschneidungsphase A
- t₂': Ende der Überschneidungsphase A'
- t₃: Ende der Drehzahlanpassungsphase B
- t₃': Ende der Schlupfphase der zweiten Kupplung K2
- W1: erste Getriebeeingangswelle
- W2: zweite Getriebeeingangswelle

## Patentansprüche

1. Verfahren zur Steuerung eines Schaltvorganges eines automatisierten Doppelkupplungsgetriebes, insbesondere eines Kraftfahrzeuges, wobei von einem wirksamen Lastgang (G1) in einen Zielgang (G2) gewechselt wird, mit folgenden kennzeichnenden Verfahrensschritten:
(a) Einstellen einer Übergangsdrehzahl (n_{Üg})
(b) Schalten des Zielganges (G2),
(c) Überschnittenes Schließen einer dem Zielgang (G2) zugeordneten Kupplung (K2) und Öffnen einer dem Lastgang (G1) zugeordneten Kupplung (K1) unter Konstanthaltung der Übergangsdrehzahl (n_{Üg}).

2. Verfahren nach Anspruch 1, **dadurch gekennzeichnet**, daß das Verfahren zur Steuerung eines Anfahrvorganges genutzt wird, und daß der Lastgang ein Anfahrgang (G1) und der Zielgang ein nächsthöherer Gang (G2) ist.

3. Verfahren nach Anspruch 1 oder 2, **dadurch gekennzeichnet**, daß der Zielgang (G2) in Abhängigkeit von einer Drehzahl (n_{M}) eines zugeordneten Antriebsmotors (M) bestimmt wird, daß unterhalb einer unteren Grenzdrehzahl ein nächstniedrigerer Gang zum Zielgang (G2) bestimmt wird, und daß oberhalb einer oberen Grenzdrehzahl ein nächsthöherer Gang zum Zielgang (G2) bestimmt wird.

4. Verfahren nach einem der Ansprüche 1 bis 3, **dadurch gekennzeichnet**, daß der Zielgang (G2) in Abhängigkeit von einer Fahrpedalstellung (Fp) und / oder in Abhängigkeit von einer Änderungsrate der Fahrpedalstellung (d(Fp)/dt) bestimmt wird.

5. Verfahren nach einem der Ansprüche 1 bis 3, **dadurch gekennzeichnet**, daß der Zielgang (G2) in Abhängigkeit von einer Drosselklappenstellung und / oder in Abhängigkeit von einer Änderungsrate der Drosselklappenstellung bestimmt wird.

6. Verfahren nach einem der Ansprüche 1 bis 5, **dadurch gekennzeichnet**, daß die Übergangsdrehzahl (n_{Üg}) in Abhängigkeit eines Drehmomentverlaufes eines zugeordneten Antriebsmotors (M) bestimmt wird.

7. Verfahren nach einem der Ansprüche 1 bis 6, **dadurch gekennzeichnet**, daß die Übergangsdrehzahl (n_{Üg}) in Abhängigkeit von einem Fahrprogrammodus bestimmt wird, daß die Übergangsdrehzahl (n_{Üg}) im Vergleich zu einem Normalmodus in einem Economy-Modus niedriger und in einem Sportmodus höher bestimmt wird.

8. Verfahren nach einem der Ansprüche 1 bis 7, **dadurch gekennzeichnet**, daß die Übergangsdrehzahl (n_{Üg}) in Abhängigkeit von einer mittleren Fahrpedalstellung (Fp) und / oder in Abhängigkeit von einer Änderungsrate der Fahrpedalstellung (d(Fp)/dt) bestimmt wird, und daß die Übergangsdrehzahl (n_{Üg}) mit kleinerer mittlerer Fahrpedalstellung und / oder mit kleinerer Änderungsrate der Fahrpedalstellung niedriger und mit größerer mittlerer Fahrpedalstellung und / oder mit größerer Änderungsrate der Fahrpedalstellung höher bestimmt wird.

9. Verfahren nach einem der Ansprüche 1 bis 7, **dadurch gekennzeichnet**, daß die Übergangsdrehzahl (n_{Üg}) in Abhängigkeit von einer mittleren Drosselklappenstellung und / oder in Abhängigkeit von einer Änderungsrate der Drosselklappenstellung bestimmt wird, und daß die Übergangsdrehzahl (n_{Üg}) mit kleinerer mittlerer Drosselklappenstellung und / oder mit kleinerer Änderungsrate der Drosselklappenstellung niedriger und mit größerer mittlerer Drosselklappenstellung und / oder mit größerer Änderungsrate der Drosselklappenstellung höher bestimmt wird.

10. Verfahren nach einem der Ansprüche 1 bis 9, **dadurch gekennzeichnet**, daß die Übergangsdrehzahl (n_{Üg}) mittels einer Motorsteuerung konstant gehalten wird, daß bei einer negativen Drehzahlabweichung ein Motordrehmoment erhöht wird, und daß bei einer positiven Drehzahlabweichung das Motordrehmoment verringert wird.

11. Verfahren nach einem der Ansprüche 1 bis 10, **dadurch gekennzeichnet**, daß die Übergangsdrehzahl (n_{Üg}) mittels einer Kupplungssteuerung konstant gehalten wird, daß bei einer negativen Drehzahlabweichung die dem Lastgang (G1) zugeordnete Kupplung (K1) schneller geöffnet wird, und daß bei einer positiven Drehzahlabweichung die dem Zielgang (G2) zugeordnete Kupplung (K2) schneller geschlossen wird.
